Europäisches Patentamt

European Patent Office

Office européen des brevets

(11) Publication number: **0 015 764**
A1

# EUROPEAN PATENT APPLICATION

(21) Application number: 80300706.1

(22) Date of filing: 07.03.80

(51) Int. Cl.³: **H 02 K 37/00**, H 02 K 19/06

(30) Priority: 12.03.79 US 19901

(43) Date of publication of application: 17.09.80
Bulletin 80/19

(84) Designated Contracting States: BE CH DE FR GB IT NL

(71) Applicant: Exxon Research and Engineering Company, P.O.Box 390 200 Park Avenue, Florham Park New Jersey 07932 (US)

(72) Inventor: Hoffman, Paul Russell, 105 Glendale Road, Exton Pennsylvania (US)

(74) Representative: Pitkin, Robert Wilfred et al, 5 Hanover Square, London W1R 9HE (GB)

(54) **Floppy disc drive assembly.**

(57) A floppy disc drive assembly with direct disc rotational drive, comprises (a) a step motor having a plurality of pole pairs with coils (55) and pole pieces (53), the latter being fabricated at predetermined locations from the base (50) of the drive housing and (b) a disc armature (62) having radial webs (64) and rotatably mounted in bearing (60, 61) on base (50) so that pairs of radial webs (64) align one pair at a time with successive ones of successively energized pole pairs (53, 55). In this manner an efficient and compact assembly is formed. Means are provided which enable clutch to engage a floppy disc with a disc drive ring 68 only when the floppy disc is properly seated within the assembly.

This invention relates to a floppy disc drive assembly.

The floppy disc is now a widely accepted storage medium and in particular has become almost universally employed in office equipment and word processing devices. The floppy disc is a thin polyethylene terephthalate (for example Mylar) platter, either 20.3 cm (8 inches) in diameter in the standard size or 13.3 cm (5-¼ inches) in diameter for the minifloppy. The smooth surface of the disc is coated with a magnetic oxide, and is housed in a square paper envelope having an opening or "window" through which the disc is exposed to a read-write head. Another smaller window provides access for detecting segment reference markings. The floppy disc can hold a substantial amount of information, the said standard disc being capable of holding a megabite. Associated with the floppy disc is a disc drive which is required to rotate the disc at a specific speed and to provide automated control of the read and write operations. Every apparatus which uses the floppy disc must necessarily have the associated floppy disc drive. The drives are necessarily relatively complex and have been relatively expensive. In view of this, and the projected substantially increased use of floppy discs in the near future, there is need of an improved floppy disc drive which is simplified, less expensive, and is capable of being packaged in a smaller volume.

It is an object of this invention to provide a floppy disc drive which is an improvement over prior disc drives in terms of one or more of reduced complexity, reduced cost and smaller package volume.

According to the present invention there is provided a floppy disc drive assembly with direct rotational drive, the drive assembly being contained within a housing, characterised by:

a step motor comprising a base plate (50) which is a portion of the housing, the base plate (50) having a plurality tabs (52) or other members integral therewith, and preferably in pairs;

a plurality of fixed poles, also preferably in pairs, each pole including a coil (55) surrounding one of said tabs (52) such that said tabs or other integral members form pole pieces (53);

means for controlling the energization of said coils (55);

bearing means (60, 61) on said base plate (50) centrally located relative to said poles, or pairs thereof;

a disc armature (62) mounted in and rotatable in said bearing means, said disc armature (62) having a predetermined number of radial webs (64) located at predetermined angular positions and of dimensions corresponding to that of said pole pieces (53);

the relative positions of said poles, or pairs thereof, and said disc armature webs (64) being such that only a pair of said webs (64) is in registration with only a pair of said pole pieces (53) at a time, whereby a sequential energization of said coils (55) will cause step operation of the motor.

In another aspect the invention provides a floppy disc drive assembly, having a disc drive for rotating a floppy disc at a predetermined speed and a recording head drive for positioning a recording head relative to said rotated disc, characterized by said head drive comprising a step motor for providing rotational movement, and a coupling mechanism for coupling said record head to said step motor so as to provide movement to said record head which is radial relative to said floppy disc, said coupling mechanism comprising linear means held in contact with and driven by said step motor for producing linear motion, said linear means including means for holding a linear element in friction contact with said step motor under spring tension.

The invention will now further be described, by way of example only, with reference to the accompanying drawings, in which:-

Figure 1 is a split perspective view of the floppy disc drive, showing a motor stator formed of coil elements interfitted with pole pieces which are formed integrally with a base plate of an overall assembly of disc drive housing and floppy disc housing portion and a disc armature having radial openings therein designed to provide webs spaced in predetermined relation to the pole pieces, to provide a step motor.

Figure 2 is a plan view in schematic form, showing the positioning of the floppy disc drive and a read head drive on the housing base plate.

Figure 3 is a detailed view along lines 3-3 showing the spring loaded feature of the transmission means for coupling the read head motor with the read head assembly.

Figure 4A is a perspective view showing the floppy disc housing portion with a floppy disc entered therein, and the relationship of a clutch handle to the front edge of the floppy disc which has been inserted into the disc drive. Figure 4B is a detailed view showing the relationship of the clutch handle to the floppy disc when it has not been fully entered into the disc drive assembly. Figure 4C is a detailed view showing the relationship of the clutch handle to the floppy disc when it has been fully inserted into the disc drive assembly.

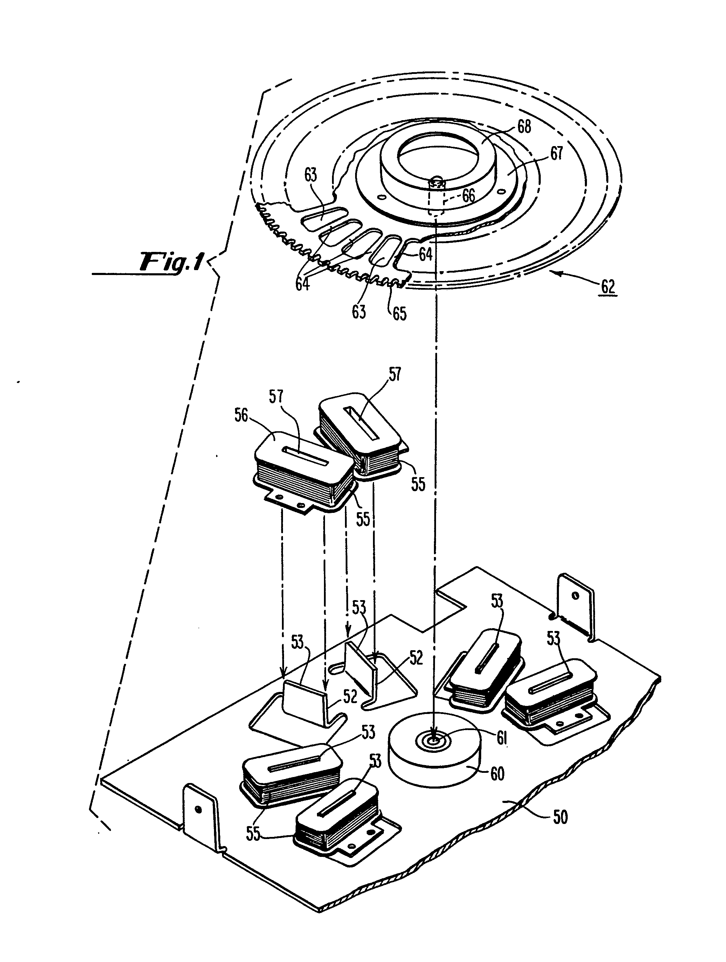

Referring now to the drawings, Figure 1 shows the base plate 50 of the overall floppy disc drive housing and container, and armature disc 62, with the relationship of the base plate and disc being indicated. Base plate 50, which is preferably constructed of ferrous material, has tabs 52 assembled therefrom by cutting the plate and bending them as shown. For the three pole pair motor of the preferred embodiment of this invention, there are three pairs of pole pieces 53, each of which has associated therewith a coil element 55. Coil element 55 comprises a substantially rectangularly wound coil with a bottom insulating piece and a top insulating piece 56 having a substantially rectangular slot 57. When coil element 55 is dropped onto a pole piece 53, the upper edge of that pole piece 53 extends through

- 4 -

the inner cavity of the coil 55 and just through rectangular opening 57. As shown, these three pole pairs are placed radially about a center hub 60 which has an axial receiving opening 61 at the center thereof for receiving a coaxial pin 66 on the bottom of armature disc 62. The remainder of the housing is conventional, and provides a portion for containing and positioning the floppy disc to be rotated and to be in proper registration with the read/write head.

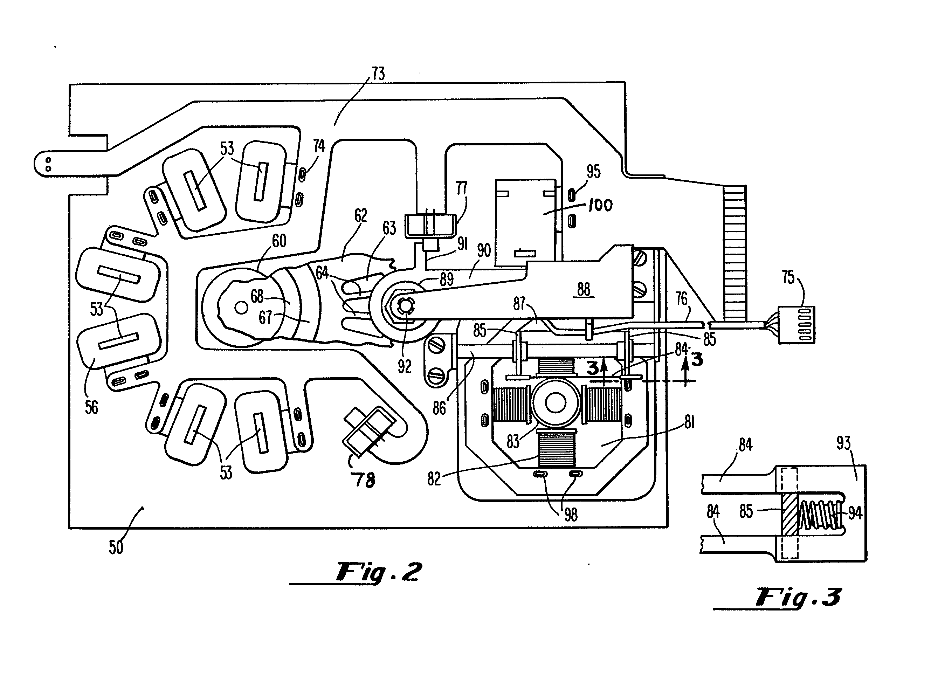

The armature disc, as shown generally at 62, comprises a flat disc portion having radial openings 63 spaced to provide radial webs 64 therebetween. The webs 64 are positioned so that one pair of them at a time can align exactly with one pair of pole pieces 53. That is, the number and the spacing of opening 63 is such that only one pair of webs (not adjacent in the illustration of Figure 2) aligns with, or is in registration with a given pair of pole pieces 53 at any time. Thus, in practice, with the armature disc 62 mounted and centered with respect to the pole pieces, a single pair of webs 64 may align precisely with a pair of pole pieces 53. The pair of pole pieces with which the armature disc is aligned will be that pair which has its corresponding coils 55 energized, according to well known principles. If such coil pair is then deenergized, and the next pair of coils is energized, the armature disc 62 is caused to rotate so that a pair of webs 64 aligns with the pole pieces 53 of the next pole pair. In this way, the armature disc 62 can be continually rotated by sequentially energizing successive coil pairs 55, causing successive alignment with respective pairs of pole pieces 53.

Continuing with the detail of Figure 1, armature disc 62 has mounted thereon a plate 67 which carries a centric elevated drive ring 68, against which a floppy disc is caused to be pressed when a drive clutch is engaged. The actual mechanism of the drive clutch may be any conventional mechanism as utilized in floppy disc drives, and accordingly is not described. The axial pin 66 which extends downward from the bottom surface of armature disc 62 is positioned to be seated in the bearing 61 of centre hub 60 on base plate 50, for center mounting of the disc relative to the pole pieces. Other details of the motor and the motor control, whereby the pole pieces are successfully energized, are not disclosed since these are well known in the art. The important feature is the construction whereby the pole pieces are individually formed from the base plate 50, and are spaced relative to the center bearing opening 61 so as to provide step-motor type registration with the webs 64 of the disc, thereby enabling step motor operation.

Armature disc 62 has, along its outer periphery, timing teeth, or notches 65. As illustrated, there are a plurality of notches for each web 64. A photodetector 78, shown in Figure 2, is positioned to detect each notch, and basic control signals are generated from each such detected notch. In the preferred embodiment, each time a notch is detected, the motor control is stepped and a next pole pair is energized. Thus, for every third notch of rotation a given pole pair is energized. For a total of n notches around the disc, each pole pair is energized n/3 times per disc revolution.

Referring now to Figure 2, there is shown a scheme which indicates the positioning of a read head drive relative to the disc drive. A flat ribbon type connector 73 is positioned on the base plate 50 to provide circuit connections to the motor and detector locations which require electric coupling. For example, terminals 74 are provided for energization of each coil 55, as controlled by a conventional sequencing control. Connections are also shown to photocell detectors 77 and 78. Only a portion of the armature disc 62 is shown for purposes of illustration, the important point being that the webs 64 have radial lengths which correspond precisely to the radial length of pole pieces 53, such that at any time a given pair of webs 64 can register exactly with a given pair of pole pieces 53.

Seen in the lower right hand portion of Figure 2 is another step motor 81 illustrated as having four pole pieces 82 and corresponding connection points 98. The rotor 83 has longitudinal notches, not shown, and an upper pulley portion which is in friction contact with a spring 84 which is tightly held at each end by elements 85. Elements 85 in turn ride on fixed axle 86 and carry coupling member 87 which in turn carries upper read head member 88 and lower read head member 90 which are attached thereto. Read head members 88 and 90 are connected to connector 75. The rotational movement of rotor 83 is translated into horizontal movement by spring loaded member 84, thereby carrying the upper and lower read head members back and forth radially with respect to the floppy disc (not shown in Figure 2), for positioning of the read head relative to the many tracks thereof. Motor 81 operates at 100 steps per revolution, but if only 40 steps are used the rotor is required to make 4/10 of a turn in order to provide the desired radial movement of the read head. It is to be noted that the floppy disc, when entered into the total assembly, is positioned between a circular element 89, which is at the end of lower read head member 90, and arm 92 at the end of upper read head member 88, which arm carries a felt pad. An electromagnet assembly, indicated generally at 95 and 100, is energized to push the pad against the floppy disc which in turn is pressed into contact with the read head, whenever the reading or writing operation is desired. The electrical connections to and from the read head are carried by the wires designated at 76, which connect to connector element 75 as shown.

Turning to Figure 3, there is a detail view of the means of maintaining spring loaded contact between spring 84 and pully portion of rotor 83. Band 84 terminates, at the right hand end as seen in Figure 2, in a U-shaped section 93 which extends beyond element 85, and has a center portion which carries a spring 94. Spring 94 maintains band 84 in an extremely tight condition, so that it is at all times maintained in good frictional contact with the upper pulley portion of rotor 83.

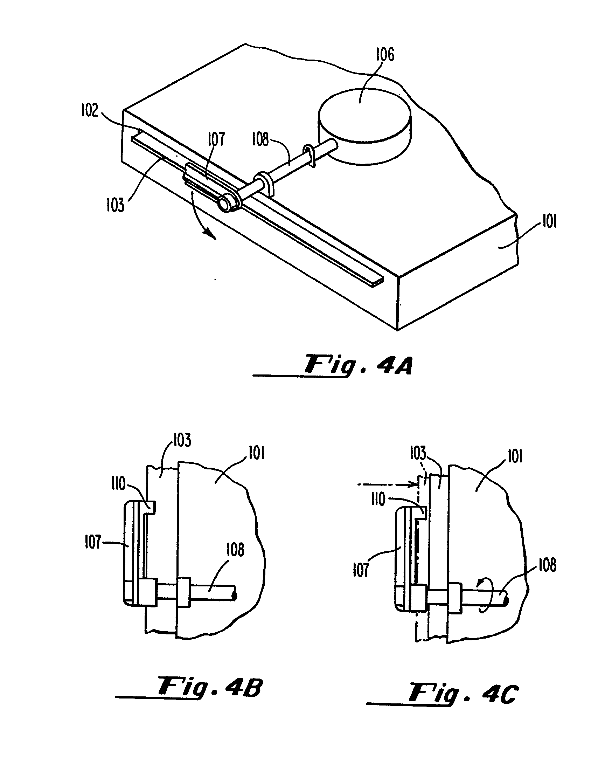

Referring now to Figures 4A-4C, there is illustrated another feature of the invention, namely a clutch handle arrangement which ensures against clutch engagement of a floppy disc 103 unless the floppy disc is fully and properly seated within a floppy disc-containing and-positioning portion which is part of the overall assembly. The clutch, indicated at 106, is a conventional clutch which contains a conical member (not shown) which seats down into the central opening of the floppy disc 103 and causes it to be pressed into contact with the drive ring 68 shown in Fig. 1. The clutch is operated by a handle 107, seen in Figure 4A, which connects through an axle 108 and an appropriate camming mechanism not shown. The handle 107, which at the 9 o'clock position (shown in Figure 4A) is above the floppy disc 103, can be rotated downward for clutch engagement only if the floppy disc 103 is fully inserted into an opening 102 in portion 101 such that the floppy disc is properly centered. As shown in Figure 4B, if the floppy disc 103 is not fully inserted, the forward extended portion 110 of handle 107 does not clear the floppy disc, and clutch engagement is not possible. As seen in Figure 4C, when the floppy disc has been fully inserted, portion 110 of handle 107 clears the proximal edge of the disc, enabling rotation of the handle with consequent clutch engagement.

Another feature of the invention lies in the provision of means for detecting when the read head 88, 90 is positioned in registration with the zero track of a floppy disc. Lower read head member 90 (Figure 2) carries an outward extension 91 which intercepts fixed photodetector 77 when and only when the read head is positioned over the zero track. The detector output is carried through connector 73 to the electronic control board (not shown) so that the drive always shows when the read head is positioned at the zero track.

0015764

The invention provides a highly efficient and relatively compact direct rotation floppy disc drive assembly. The invention gives rise to a thinner motor than previously available, thereby reducing the size of the overall drive package. Construction is also simplified, resulting in less expense. For example, motor pole pieces are fabricated integrally with the base plate of the overall assembly.

WHAT WE CLAIM IS:

1.  A floppy disc drive assembly with direct rotational drive, the drive assembly being contained within a housing, characterised by:

a step motor comprising a base plate (50) which is a portion of the housing, the base plate (50) having a plurality tabs (52) or other members integral therewith, and preferably in pairs;

a plurality of fixed poles, also preferably in pairs, each pole including a coil (55) surrounding one of said tabs (52) such that said tabs or other integral members form pole pieces (53);

means for controlling the energization of said coils (55);

bearing means (60, 61) on said base plate (50) centrally located relative to said poles, or pairs thereof;

a disc armature (62) mounted in and rotatable in said bearing means, said disc armature (62) having a predetermined number of radial webs (64) located at predetermined angular positions and of dimensions corresponding to that of said pole pieces (53);

the relative positions of said poles, or pairs thereof, and said disc armature webs (64) being such that only a pair of said webs (64) is in registration with only a pair of said pole pieces (53) at a time, whereby a sequential energization of said coils (55) will cause step operation of the motor.

2.  A floppy disc drive assembly as claimed in Claim 1, characterized in that the step motor comprises three pole pairs, and said disc armature (62) comprises radial openings (63) which define said radial webs (64) therebetween toward the outer periphery of said disc armature (62).

3.  A floppy disc drive assembly as claimed in claim 2, characterised in that said webs (64) are arranged relative to said pole pair positions such that as successive pole pairs are energized there are equal successive incremental movements of said disc armature.

4. A floppy disc drive assembly as claimed in any preceding claim, characterised in that said tabs (52) which form said pole pieces (53) are constructed of ferrous material.

5. A floppy disc assembly as claimed in any preceding claim, characterised in that said armature disc (62) carries an integral drive ring (68) driving a floppy disc when held in contact with the drive ring.

6. A floppy disc drive assembly as claimed in any preceding claim characterised by further comprising a recording read head assembly (88, 89) mounted on said base plate (50) located so as to be capable of reading data on a floppy disc (103) when the latter is located in position and is driven by said step motor.

7. A floppy disc drive assembly, having a disc drive for rotating a floppy disc at a predetermined speed and a recording head drive for positioning a recording head relative to said rotated disc, characterized by said head drive comprising a step motor for providing rotational movement, and a coupling mechanism for coupling said record head to said step motor so as to provide movement to said record head which is radial relative to said floppy disc, said coupling mechanism comprising linear means held in contact with and driven by said step motor for producing linear motion, said linear means including means for holding a linear element in friction contact with said step motor under spring tension.

8. A floppy disc drive assembly as claimed in any preceding claim characterised in that said read head has integrally connected thereto a zero track detector for detecting when said read head is at a zero track position.

9. A floppy disc drive assembly as claimed in claim 7, characterised in that said disc drive comprises a motor having a plurality of stator poles, each of said poles having a pole piece formed from an integral part of the disc drive housing.

10. The floppy disc assembly as claimed in any preceding claim, characterised by further comprising clutch means (106) for engaging a floppy disc (103) with said disc drive, said clutch means (106) including a clutch handle (107) configured such that it is operative only when the floppy disc (103) is fully inserted.

0015764

_Fig.1_

Fig.2

Fig.3

0015764

_Fig. 4A_

_Fig. 4B_

_Fig. 4C_

## DOCUMENTS CONSIDERED TO BE RELEVANT

| Category | Citation of document with indication, where appropriate, of relevant passages | Relevant to claim |
|---|---|---|
| | US - A - 3 226 584 (PINTELL)<br>* Column 2, lines 36-57; figure 1 *<br><br>-- | 1 |
| | DE - C - 534 319 (ULLER)<br>* Page 2, lines 50-57; page 3, lines 6-27 *<br><br>-- | 1,4,9 |
| | US - A - 3 869 626 (PUTTOCK)<br>* Column 1, lines 39-49 *<br><br>-- | 1,4 |
| | FR - A - 1 592 065 (BARTHALON)<br>* Page 14, right-hand column, line 34 - page 15, left-hand column, line 9; figures 32,33 *<br><br>-- | 1,3 |
| | US - A - 3 833 926 (HALL)<br>* Column 5, line 39 - column 6, line 8 *<br><br>-- | 6,7 |
| | IBM TECHNICAL DISCLOSURE BULLETIN, IBM Corporation, vol. 20, no. 10, March 1978<br>New York US<br>J.L. NEUBAUER: "Low Profile Diskette Drive", pages 4066-4068<br>* Page 4066, lines 5-10 *<br><br>-- | 10 |
| A | US - A - 2 552 315 (GOTTLIEB)<br>* Column 5, lines 10-38 *<br><br>-- | 1 |

**CLASSIFICATION OF THE APPLICATION (Int. Cl. ³)**

H 02 K 37/00
19/06

**TECHNICAL FIELDS SEARCHED (Int.Cl. ³)**

H 02 K 37/00
19/06
21/24
1/12
1/18
G 11 B 3/60
17/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

./.

The present search report has been drawn up for all claims

| Place of search | Date of completion of the search | Examiner |
|---|---|---|
| The Hague | 27-05-1980 | RANDES |

EPO Form 1503.1 06.78

## DOCUMENTS CONSIDERED TO BE RELEVANT

| Category | Citation of document with indication, where appropriate, of relevant passages | Relevant to claim |
|---|---|---|
| A | US – A – 352 950 (WARREN) | 5 |
| A | US – A – 3 959 823 (HEIDECKER) | 8 |
| A | FR – A – 2 225 804 (TED BILD-PLATTEN) | |
| A | DE – A – 1 763 112 (LICENTIA) | |
| A | US – A – 2 484 001 (RAYMOND) | |
| A | US – A – 2 432 070 (SANDBORN) | |
| A | DE – A – 2 541 694 (SIEMENS) | |

----

**CLASSIFICATION OF THE APPLICATION (Int. Cl. ³)**

**TECHNICAL FIELDS SEARCHED (Int. Cl. ³)**

EPO Form 1503.2   06.78